# EUROPÄISCHE PATENTSCHRIFT

(11) **EP 2 525 128 B1**
(45) Veröffentlichungstag und Bekanntmachung des Hinweises auf die Patenterteilung: **01.01.2014**
(21) Anmeldenummer: 12167396.6
(22) Anmeldetag: 09.05.2012
(51) Int. Cl.: F16L 43/00

(54) **Übergangsstück**
Transition piece
Pièce de transition

(30) Priorität: 18.05.2011 DE 202011100879 U
(43) Veröffentlichungstag der Anmeldung: 21.11.2012
(73) Patentinhaber: Özpolat, Ilgaz, 64385 Reichelsheim / Odw. (DE)
(72) Erfinder: Özpolat, Ilgaz, 64385 Reichelsheim / Odw. (DE)
(74) Vertreter: WSL Patentanwälte Partnerschaftsgesellschaft

(56) Entgegenhaltungen:
- EP-A1- 0 195 528
- FR-A- 1 278 649

## Beschreibung

Die vorliegende Erfindung betrifft ein Übergangsstück für eine Umlenkung strömender Gase aus einer Einströmrichtung in eine Ausströmrichtung mit einem Eintrittsrohr mit einem Eintrittsquerschnitt, wobei das Eintrittsrohr einen als Diffusor ausgestalteten Abschnitt aufweist, in dem sich der Eintrittsquerschnitt in Strömungsrichtung vergrößert, einem Austrittsrohr mit einem Austrittsquerschnitt und einem Rohrübergang, der das Eintrittsrohr und das Austrittsrohr so miteinander verbindet, dass das Eintrittsrohr und das Austrittsrohr einen Umlenkwinkel einschließen.

Übergangsstücke der zuvor beschriebenen Art sind für das Abführen von Küchendunst bekannt. Küchendunst, insbesondere Dämpfe, Abgase und dergleichen, strömt im Allgemeinen zunächst von der verursachenden Stelle durch ein ihr führendes Rohr vertikal in höhere Bereiche des Raumes, z. B. der Küche, wird von dort im Wesentlichen horizontal unterhalb der Decke des Raumes geführt und üblicherweise durch eine Außenwand unterhalb der Decke aus dem Raum oder dem Gebäude geleitet. Beim Übergang vom vertikalen in den horizontalen Bereich sind die strömenden Gase aus einer Einströmrichtung um etwa 90° in eine Ausströmrichtung umzulenken. Für diese Umlenkung wird im Stand der Technik ein Übergangsstück verwendet.

Dabei ist aus dem Stand der Technik ein Übergangsstück bekannt, bei dem das Eintrittsrohr und das Austrittsrohr die gleiche, zumeist kreisförmige Querschnittsform aufweisen. Solche Übergangsstücke, bei denen das Eintrittsrohr und das Austrittsrohr die gleiche Querschnittsform aufweisen, werden im Folgenden als Bögen bezeichnet. Dabei unterscheidet man insbesondere Rundbögen, bei denen das Eintrittsrohr und das Austrittsrohr jeweils einen kreisförmigen Eintritts- bzw. Austrittsquerschnitt aufweisen und Flachbögen, bei denen der Eintrittsquerschnitt und der Austrittsquerschnitt jeweils im Wesentlichen rechteckig sind.

Häufig ist es jedoch erforderlich, dass das beispielsweise unterhalb einer Decke geführte horizontale Rohr aus Platzgründen in einer abgehängten Decke angeordnet ist und daher rechteckig ausgestaltet sein muss, während die Anschlüsse der meisten Abzugshauben einen kreisförmigen Querschnitt aufweisen, sodass der senkrechte Rohrabschnitt vor dem Eintrittsrohr des Übergangsstücks rund ist. Das Übergangsstück stellt dann nicht nur eine Umlenkung um den erforderlichen Winkel bereit, sondern auch einen Übergang zwischen zwei verschiedenen Querschnittsformen des Eintrittsquerschnitts des Übergangsstücks einerseits und des Austrittsquerschnitts des Übergangsstücks andererseits.

Solche Übergangsstücke mit voneinander abweichenden Querschnittsformen des Eintrittsquerschnitts des Eintrittsrohrs und des Austrittsquerschnitts des Austrittsrohrs werden im Folgenden als Umlenkstücke bezeichnet.

Aus strömungstechnischer Sicht sind selbst bei minimalem Raumbedarf nur minimale Druckverluste erwünscht. In der Praxis hat man festgestellt, dass bei einem stumpfen Aufeinandertreffen eines vertikalen und eines horizontalen Rohrabschnitts hohe Druckverluste auftreten, die mit großer Geräuschentwicklung verbunden sind, wobei außerdem ein nicht unerheblicher Platzbedarf gegeben ist. Man hat festgestellt, dass die bei den bekannten Übergangsstücken auftretenden Druckverluste ihre Ursache in Reibungsverlusten an den Rohrwänden haben und hauptsächlich in den Verwirbelungsverlusten in Toträumen.

Aus dem Stand der Technik sind daher beispielsweise sogenannten gesoftete Übergangsstücke bekannt, die äußerlich an ein Ofenrohr erinnern und einen sanften Übergang von einem im Wesentlichen vertikalen Eintrittsrohr in ein im Wesentlichen horizontales Austrittsrohr bereitstellen.

Die deutsche Patentanmeldung DE 10 2009 035 558 des gleichen Anmelders offenbart ein Übergangsstück für die Umlenkung strömender Gase von einer Einströmrichtung um etwa 90° in eine Ausströmrichtung, bestehend aus einem Umlenk-Formstück, dessen Eintrittsrohr einen etwa kreisförmigen Querschnitt und dessen Abström-Rohrteil abstromseitig einen etwa rechteckigen bis ovalen Querschnitt hat mit einer größeren Breite und einer kleineren Höhe, und einem geraden, sich abstromseitig an das Abström-Rohrteil anschließenden Austrittsrohr des selben Querschnittes wie das Abström-Rohrteil. Um eine Minimierung von Druckverlusten zu erreichen, weist das Umlenkstück aus der DE 10 2009 035 558 A1 einen sich abstromseitig an das Einströmrohr anschließenden Diffusor mit einem sich in Zuströmrichtung erweiternden Durchmesser auf, wobei das Abström-Rohrteil in Abströmrichtung unter Bildung einer Abflachung wenigstens mittig eine zunehmende Höhe aufweist.

FR 1 278 649 offenbart gattungsgemäßes ein Übergangsstück für eine Umlenkung strömender Gase aus einer Einströmrichtung in eine Ausströmrichtung, bei welchem sich der Eintrittsquerschnitt in Strömungsrichtung vergrößert und welches einen Rohrübergang aufweist mit einem sich über den Eintrittsquerschnitt des Eintrittsrohrs erstreckenden konkav gekrümmten Innenwandabschnitt. EP 0 195 528 offenbart ebenfalls ein solches Übergangsstück.

Auch wenn das aus dem Stand der Technik bekannte Umlenkstück bereits verglichen mit dem für das Verbauen erforderlichen Raumbedarf minimierte Druckverluste und eine verringerte Geräuschentwicklung aufweist, so ist es Aufgabe der vorliegenden Erfindung, ein Übergangsstück bereitzustellen, das ein weiter optimiertes Verhältnis zwischen dem Raumbedarf des Übergangsstückes und den Druckverlusten sowie der Geräuschentwicklung bereitstellt.

Zur Lösung dieser Aufgabe wird erfindungsgemäß ein Übergangsstück für eine Umlenkung strömender Gase aus einer Einströmrichtung in eine Ausströmrichtung mit einem Eintrittsrohr mit einem Eintrittsquerschnitt, wobei das Eintrittsrohr einen als Diffusor ausgestalteten Abschnitt aufweist, in dem sich der Eintrittsquerschnitt in Strömungsrichtung vergrößert, einem Austrittsrohr mit einem Austrittsquerschnitt und einem Rohrübergang, der das Eintrittsrohr und das Austrittsrohr so miteinander verbindet, dass das Eintrittsrohr und das Austrittsrohr einen Umlenkwinkel einschließen, wobei der Rohrübergang einen sich zumindest abschnittsweise über den Eintrittsquerschnitt des Eintrittsrohrs erstreckenden konkav gekrümmten Innenwandabschnitt aufweist, wobei der Rohrübergang einen sich an den konkav gekrümmten Innenwandabschnitt anschließenden konvex gekrümmten Innenwandabschnitt aufweist und wobei der Rohrübergang einen sich an den konvex gekrümmten Innenwandabschnitt anschließenden zweiten konkav gekrümmten Innenwandabschnitt aufweist.

Es hat sich gezeigt, dass das aus der DE 10 2009 035 558.8 bekannte Umlenkstück eine Verbesserung dadurch erfahren kann, dass die Abflachung, die sich über den Eintrittsquerschnitt des Eintrittsrohrs erstreckt, derart abgeändert wird, dass ein sich zumindest abschnittsweise über den Eintrittsquerschnitt des Eintrittsrohrs erstreckender konkav gekrümmter Innenwandabschnitt gebildet wird.

Wenn im vorliegenden Anmeldungstext die Begriffe konkav und konvex verwendet werden, so wird damit immer die Form einer die Strömung begrenzenden Fläche, d.h. in der Regel eines Innenwandabschnittes des Übergangsstücks beschrieben. Die Einströmrichtung bezeichnet diejenige Strömungsrichtung, in der ein Gas im Betrieb in das Übergangsstück einströmt, wobei diese Richtung im Wesentlichen parallel zu der Innenwand des Eintrittsrohrs ist. Gleiches gilt analog für die Ausströmrichtung, wobei diese im Wesentlichen parallel zur Innenwand des Austrittsrohrs ist.

Eintritts- und Austrittsquerschnitt bezeichnen diejenigen Querschnittsflächen des Eintrittsrohrs bzw. des Austrittsrohrs, die im Wesentlichen senkrecht zur Einströmrichtung und zur Ausströmrichtung sind.

Die vorliegende Erfindung betrifft insbesondere ein Umlenkstück, bei welchem der Eintrittsquerschnitt und das Austrittsquerschnitt voneinander verschiedene Formen aufweisen, und einen Bogen, bei dem der Eintrittsquerschnitt und der Austrittsquerschnitt eine im Wesentlichen gleiche Form aufweisen.

Als Strömungsrichtung im Sinne der vorliegenden Erfindung ist eine Richtung vom Eintrittsrohr zum Austrittsrohr durch das Übergansstück bezeichnet. Da das Eintrittsrohr einen als Diffusor ausgestalteten Abschnitt aufweist, in dem sich der Eintrittsquerschnitt, d.h. der Querschnitt des Eintrittsrohrs, in Strömungsrichtung aufweitet, ist dem erfindungsgemäßen Übergangsstück auch im nicht verbauten Zustand die Strömungsrichtung eindeutig anzusehen.

Ein derartiger Diffusor im Eintrittsrohr dient dazu, die Geschwindigkeit des durch das Übergangsrohr strömende Gas zu verringern und entsprechend den Gasdruck zu erhöhen.

In einer Ausführungsform ist der Diffusor, welcher einen integralen Bestandteil des Eintrittsrohrs bildet, unmittelbar mit dem Rohrübergang verbunden.

Geht man davon aus, dass der Eintrittsquerschnitt und der Austrittsquerschnitt unabhängig von ihrer jeweiligen Form in einer Ausführungsform im Wesentlichen die gleiche Querschnittsfläche aufweisen, so bedeutet das Vorhandensein eines Diffusors im Eintrittsrohr, dass das erfindungsgemäße Übergangsstück in einer Ausführungsform an anderer Stelle zwischen dem Diffusor und dem Austritt aus dem Austrittsrohr eine Düse aufweisen muss, welche den Querschnitt des Rohres wieder so verringert, dass die Querschnittsfläche des Austrittsrohrs im Wesentlichen gleich der Querschnittsfläche des Eintrittsrohrs ist. Dabei ist die Düse vorzugsweise integraler Bestandteil des Rohrübergangs.

In einer Ausführungsform der Erfindung beträgt der Umlenkwinkel zwischen der Einströmrichtung und der Ausströmrichtung etwa 90°, sodass das Übergangsstück zum Einbau in eine Lüftungsanlage geeignet ist, um den Übergang von einem im Wesentlichen vertikalen Rohrabschnitt in einen im Wesentlichen horizontalen Rohrabschnitt bereitzustellen.

In einer Ausführungsform der Erfindung lässt sich das Eintrittsrohr gegenüber dem Rohrübergang derart abgrenzen, dass das Eintrittsrohr überall eine im Wesentlichen zur Einströmrichtung senkrechte Querschnittsfläche mit einer diese begrenzenden Innenwand des Eintrittsrohrs aufweist.

Ähnlich verhält es sich mit dem Austrittsrohr, welches sich in einer Ausführungsform so gegenüber dem Rohrübergang abgrenzt, dass das Austrittsrohr eine im Wesentlichen zur Ausströmrichtung senkrechte Querschnittsfläche aufweist mit einer diese vollständig umgebenden Innenwand des Austrittsrohrs.

Wenn im Sinne der vorliegenden Anmeldung von einem sich zumindest abschnittsweise über den Eintrittsquerschnitt des Eintrittsrohrs erstreckenden konkav gekrümmten Innenwandabschnitt die Rede ist, so wird damit ein Innenwandabschnitt des Rohrübergangs bezeichnet, der, wenn man einen Querschnitt durch das Übergangsstück in einer Ebene betrachtet, die von der Einströmrichtung und der Ausströmrichtung aufgespannt wird, die "Außenkurve" bzw. den Außenbogen des Rohrübergangs bildet, sich in der Verlängerung des Eintrittsquerschnitts erstreckt und sich so über diesen erstreckt.

Der Rohrübergang weist erfindungsgemäß zudem einen sich an den konkav gekrümmten Innenwandabschnitt anschließenden konvex gekrümmten Innenwandabschnitt auf, der sich vorzugsweise ebenfalls zumindest abschnittsweise über den Eintrittsquerschnitt des Eintrittsrohrs erstreckt. Auf diese Weise wird der Rohrübergang abschnittsweise von einer S-Form aus einem konvexen und einem konkaven Innenwandabschnitt gebildet.

Der zuvor beschriebene konvex gekrümmte Innenwandabschnitt bildet weiterhin den Übergangsbereich zwischen dem erfindungsgemäßen konkav gekrümmten Innenwandabschnitt des Eintrittsrohrs und einem zweiten, weiteren konkav gekrümmten Innenwandabschnitt, der sich erfindungsgemäß an den konvex gekrümmten Innenwandabschnitt anschließt. Dieser weitere bzw. zweite konkav gekrümmte Innenwandabschnitt des Rohrübergangs bildet einen Teil einer Düse, die dazu dient, den Rohrquerschnitt des Übergangsstücks nach der Aufweitung durch den Diffusor des Eintrittsrohrs wieder zu verringern.

In einer Ausführungsform der Erfindung ist das Übergangsstück symmetrisch ausgestaltet, sodass es eine Symmetrieebene aufweist, die von der Zuströmrichtung und der Abströmrichtung aufgespannt wird.

Dabei ist es zweckmäßig, wenn sich der sich zumindest abschnittsweise über den Eintrittsquerschnitt des Eintrittsrohrs erstreckende konkav gekrümmte Innenwandabschnitt des Rohrübergangs in der Symmetrieebene ausgehend von einer zu der Einströmrichtung parallelen Geraden, die durch den Schwerpunkt bzw. den Mittelpunkt des Eintrittsquerschnitts verläuft, erstreckt.

Auf diese Weise beginnt die Krümmung des konkav gekrümmten Innenwandabschnitts des Rohrübergangs ausgehend von der Verlängerung der Rohrmittenachse des Eintrittsrohrs und erstreckt sich sodann entgegen der Strömungsrichtung.

In einer Ausführungsform der Erfindung erstreckt sich der sich über den Eintrittsquerschnitt des Eintrittsrohrs erstreckende konkav gekrümmte Innenwandabschnitt in der Symmetrieebene derart, dass er einen Abschnitt aufweist, der sich in einer Ebene erstreckt oder diese schneidet, die senkrecht zur Symmetrieebene ist und in der ein Innenwandabschnitt des Austrittsrohrs liegt. Damit ist gewährleistet, dass der Rohrübergang eine "Höhe" aufweist, die mindestens der Höhe bzw. dem Durchmesser des Austrittsrohrs in der Symmetrieebene entspricht oder aber vorzugsweise gegenüber dieser überschießt. Es hat sich gezeigt, dass auf diese Weise eine Minimierung des Druckverlustes möglich ist. Das heißt betrachtet man eine Ebene, die senkrecht zur Symmetrieebene ist und in der sich ein Innenwandabschnitt des Austrittsrohrs befindet, so muss der konkav gekrümmte Innenwandabschnitt des Rohrübergangs zumindest einen Abschnitt aufweisen, der ebenfalls in dieser Ebene liegt oder aber der konkav gekrümmte Innenwandabschnitt muss diese Ebene schneiden, sodass er eine "Höhe" erreicht, die über die Höhe bzw. den Durchmesser des Austrittsrohrs hinausgeht.

Es versteht sich, dass die Referenzebene, die senkrecht zur Symmetrieachse ist, und in der sich ein Innenwandabschnitt des Austrittsrohrs erstreckt, die Ebene ist, welche die sich an den Au-βenbogen anschließende äußere Wand des Austrittsrohrs enthält.

In einer Ausführungsform der Erfindung weist der sich zumindest abschnittsweise über den Eintrittsquerschnitt des Eintrittsrohrs erstreckende konkav gekrümmte Innenwandabschnitt des Rohrübergangs in Ebenen parallel zur Symmetrieebene eine mit zunehmenden Abstand von der Symmetrieebene abnehmende Länge gemessen parallel zur Ausströmrichtung auf. Auf diese Weise ergibt sich in der Draufsicht von oben auf das erfindungsgemäße Übergangsstück ein gekrümmter Verlauf der Außenkontur des konkav gekrümmten Innenwandabschnitts des Rohrübergangs.

Insbesondere ist der sich über den Eintrittsquerschnitt des Eintrittsrohrs erstreckende konkav gekrümmte Innenwandabschnitt in der Symmetrieebene des Übergangsstücks konkav gekrümmt. Allerdings ist in einer Ausführungsform der sich zumindest abschnittsweise über den Eintrittsquerschnitt des Eintrittsrohrs erstreckende Innenwandabschnitt des Rohrübergangs in Ebenen senkrecht zur Symmetrieebene ebenfalls konkav gekrümmt. Die konkave Krümmung des sich zumindest abschnittweise über den Eintrittsquerschnitt des Eintrittsrohrs erstreckenden Innenwandabschnitts des Rohrübergangs nicht nur in der Symmetrieebene und in Ebenen parallel zur Symmetrieebene, sondern auch in Ebenen senkrecht zur Symmetrieebene, führt zu einer kuppelartigen Konstruktion direkt über dem Eintrittsquerschnitt des Eintrittsrohrs, d.h. in vertikaler Verlängerung des Eintrittsrohrs. Diese kuppelartige Ausgestaltung des Rohrübergangs trägt in erheblichem Maße zu einer Verringerung des Druckabfalls im Übergangsstück bei.

In einer weiteren Ausführungsform des erfindungsgemäßen Übergangsstücks schließt sich in der Symmetrieebene betrachtet an den konkav gekrümmten Innenwandabschnitt des Rohrübergangs, der sich über den Eintrittsquerschnitt erstreckt, in Strömungsrichtung des Gases in Richtung auf das Austrittsrohr hin ein gerader Innenwandabschnitt an.

Es versteht sich, dass sich eine solche Ausführungsform insbesondere dann anbietet, wenn der konkav gekrümmte Innenwandabschnitt des Rohrübergangs eine Höhe erreicht, die im Wesentlichen der Lage der außen liegenden Innenwand des Austrittsrohrs in der Symmetrieebene entspricht.

In einer Ausführungsform der Erfindung weist der sich zumindest abschnittsweise über den Eintrittsquerschnitt des Eintrittsrohrs erstreckende Innenwandabschnitt des Rohrübergangs in Ebenen senkrecht zur Symmetrieebene daher in Strömungsrichtung des Gases eine zunächst zunehmende und dann vorzugsweise wieder abnehmende Breite auf, welche die Druckverlust verringernde Eigenschaft der kuppelartigen Konstruktion des Rohrübergangs unterstützt.

Alternativ dazu schließt sich der sich über den Eintrittsquerschnitt des Eintrittsrohrs erstreckende konkav gekrümmte Innenwandabschnitt in der Symmetrieebene unmittelbar an eine Innenwand des Austrittsrohrs an.

In einer Ausführungsform der Erfindung weist der konkav gekrümmte Innenwandabschnitt des Rohrübergangs in der Symmetrieebene einen konstanten Krümmungsradius auf, der zweckmä-βigerweise den gleichen Krümmungsradius aufweist, wie der eines kreisförmigen Eintrittsrohrs.

Dabei weist der ovale bis rechteckige Austrittsquerschnitt in einer Ausführungsform eine Breite und eine Höhe auf, wobei die Breite größer ist als die Höhe.

Weitere Vorteile, Merkmale und Anwendungsmöglichkeiten der vorliegenden Erfindung werden anhand der folgenden Beschreibung von Ausführungsformen und der dazugehörigen Figuren deutlich.
Figur 1 zeigt eine Ansicht einer ersten Ausführungsform eines erfindungsgemäßen Rundbogens vom Austrittsrohr her.
Figur 2 zeigt eine Rückansicht des Rundbogens aus Figur 1.
Figur 3 zeigt eine perspektivische Ansicht des Rundbogens aus Figur 1 von schräg unten.
Figur 4 zeigt eine perspektivische Ansicht des Rundbogens aus Figur 1 von schräg oben.
Figur 5 zeigt eine Schnittansicht durch den Rundbogen aus Figur 1 entlang der Symmetrieebene A-A.
Figur 6 zeigt eine Draufsicht von oben auf den Rundbogen aus Figur 1.
Figur 7 zeigt eine perspektivische Ansicht einer weiteren Ausführungsform eines erfindungsgemäßen Rundbogens vom Eintrittsrohr her.
Figur 8 zeigt eine perspektivische Ansicht des Rundbogens aus Figur 7 von hinten.
Figur 9 zeigt eine perspektivische Ansicht des Rundbogens aus Figur 7 von schrägt unten.
Figur 10 zeigt eine perspektivische Ansicht des Rundbogens aus Figur 7 von schräg oben.
Figur 11 zeigt eine seitliche Schnittansicht durch den erfindungsgemäßen Rundbogen aus Figur 7 entlang der Linie A-A.
Figur 12 zeigt eine Draufsicht von oben auf den erfindungsgemäßen Rundbogen aus Figur 7.
Figur 13 zeigt eine Ansicht eines erfindungsgemäßen Umlenkstücks in einer Ansicht vom Austrittsrohr her.
Figur 14 zeigt eine perspektivische Ansicht des Umlenkstücks aus Figur 13 von schräg unten.
Figur 15 zeigt eine perspektivische Ansicht des Umlenkrohrs aus Figur 13 von schräg oben.
Figur 16 zeigt eine Seitenansicht des Umlenkrohrs aus Figur 13.
Figur 17 zeigt eine Ansicht des Umlenkrohrs aus Figur 13 von unten.
Figur 18 zeigt eine Ansicht einer alternativen Ausführungsform eines Umlenkrohrs in einer Ansicht vom Austrittsrohr her.
Figur 19 zeigt eine perspektivische Ansicht des Umlenkrohrs auf Figur 18 in einer Ansicht von schräg unten.
Figur 20 zeigt eine perspektivische Ansicht des Umlenkrohrs aus Figur 18 von schräg oben.
Figur 21 zeigt eine Seitenansicht des Umlenkrohrs aus Figur 18.
Figur 22 zeigt eine Draufsicht von oben auf das Umlenkrohr aus Figur 18.
Figur 23 zeigt eine Ansicht einer weiteren Ausführungsform eines erfindungsgemäßen Umlenkrohrs in einer Ansicht vom Austrittsrohr her.
Figur 24 zeigt eine perspektivische Ansicht des Umlenkrohrs aus Figur 23 von schräg unten.
Figur 25 zeigt eine Seitenansicht des Umlenkrohrs aus Figur 23.
Figur 26 zeigt eine Draufsicht von oben auf das Umlenkrohr aus Figur 23.
Figur 27 zeigt eine Ansicht einer weiteren Ausführungsform eines erfindungsgemäßen Umlenkstücks in einer Ansicht vom Austrittsrohr her.
Figur 28 zeigt eine Ansicht des Umlenkstücks aus Figur 27 in einer Ansicht von hinten.
Figur 29 zeigt eine perspektivische Ansicht des Umlenkrohrs aus Figur 27 von schräg unten.
Figur 30 zeigt eine perspektivische Ansicht des Umlenkrohrs aus Figur 27 von schräg oben.
Figur 31 zeigt eine Schnittansicht des Umlenkrohrs aus Figur 27 in der Symmetrieebene.
Figur 32 zeigt eine Draufsicht von oben auf das Umlenkrohr aus Figur 27.

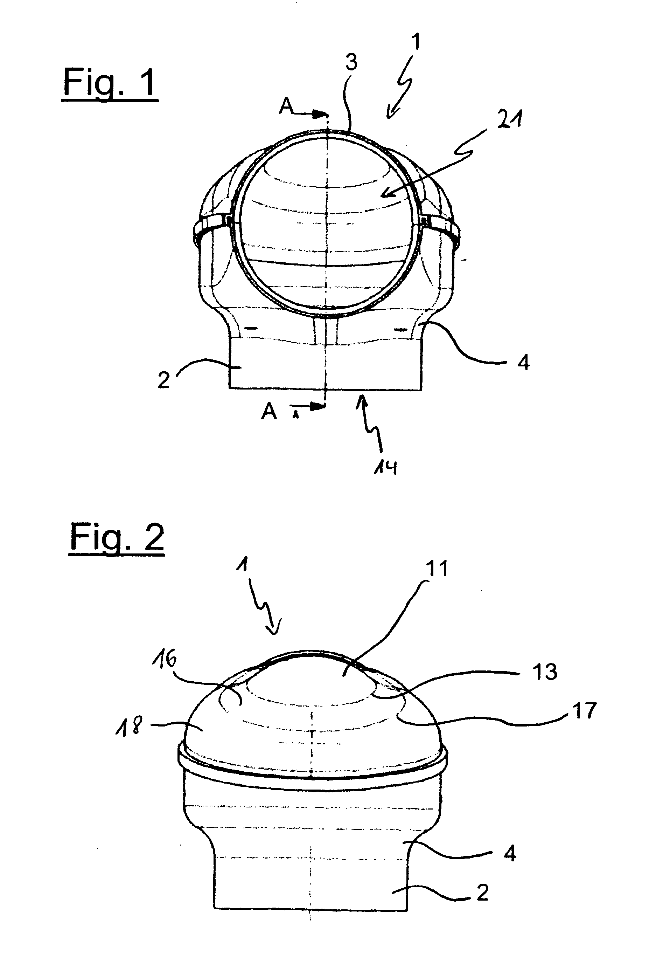

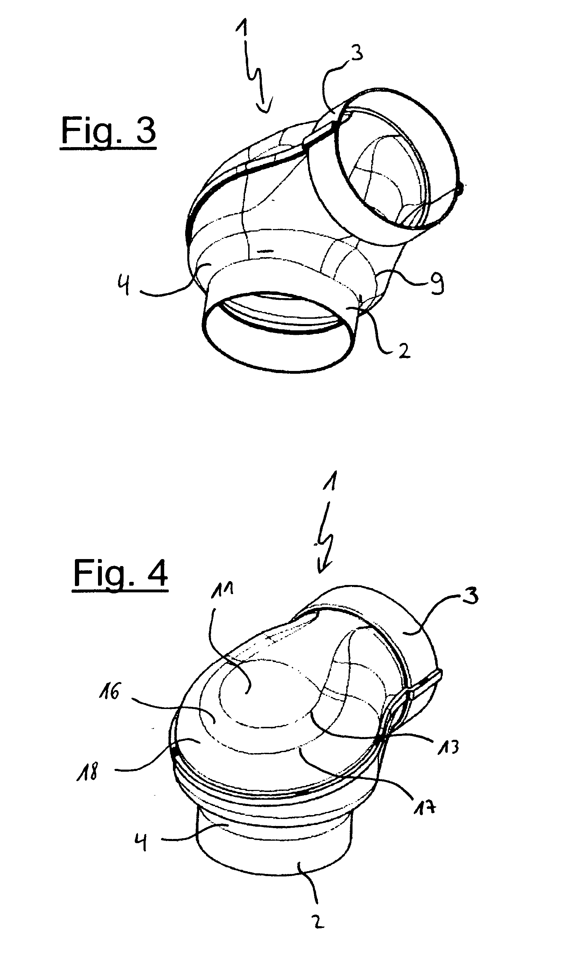

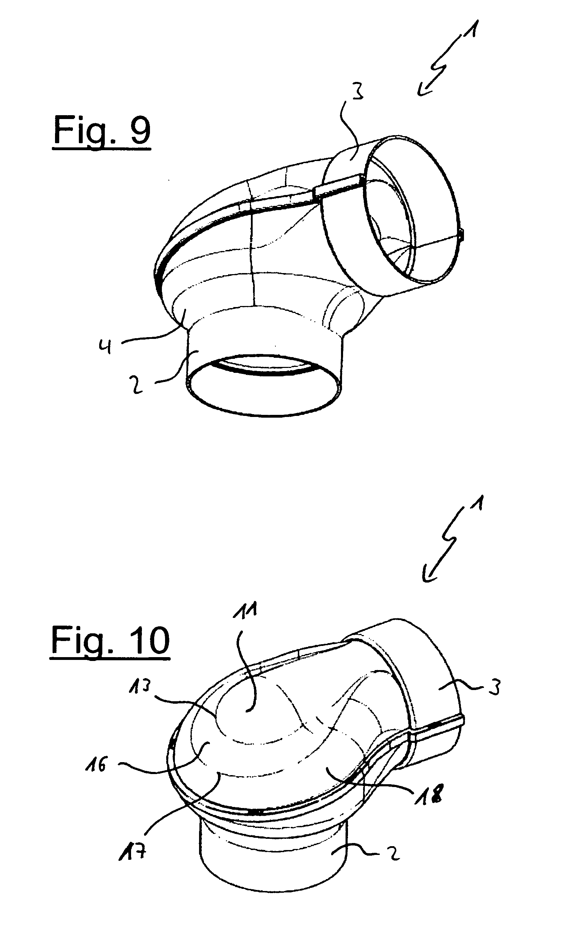

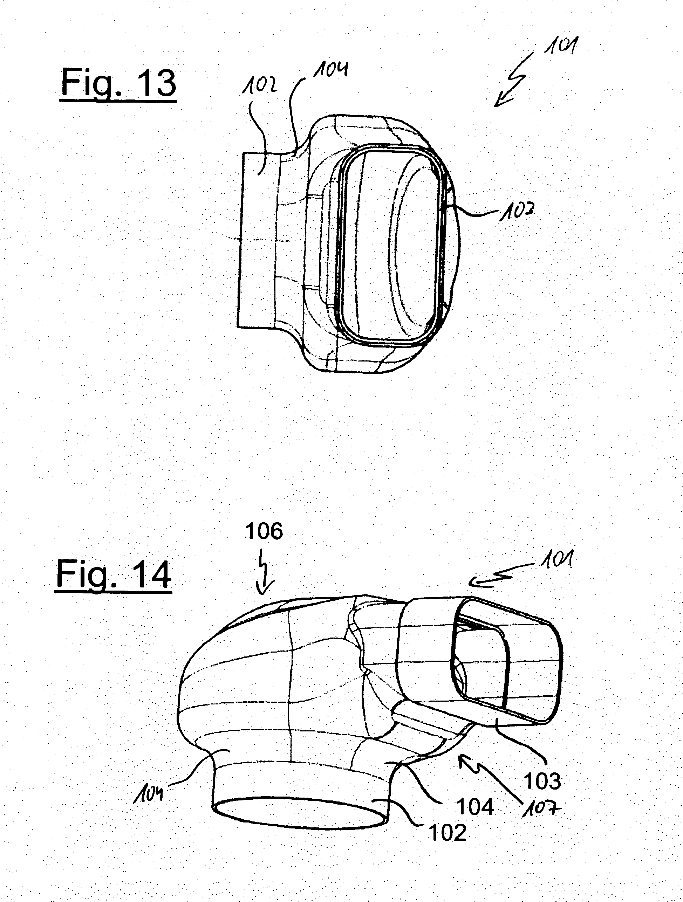

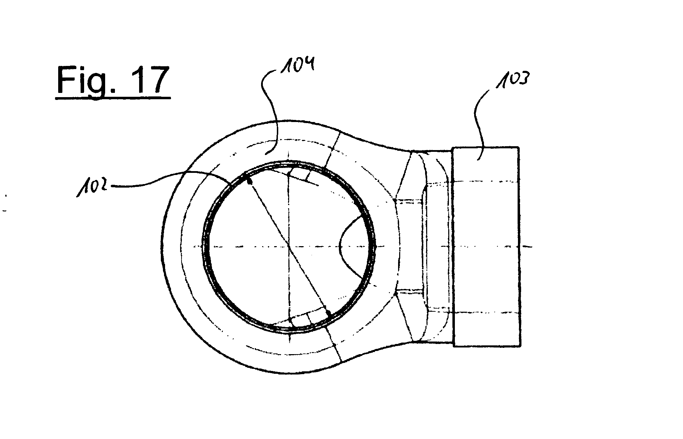

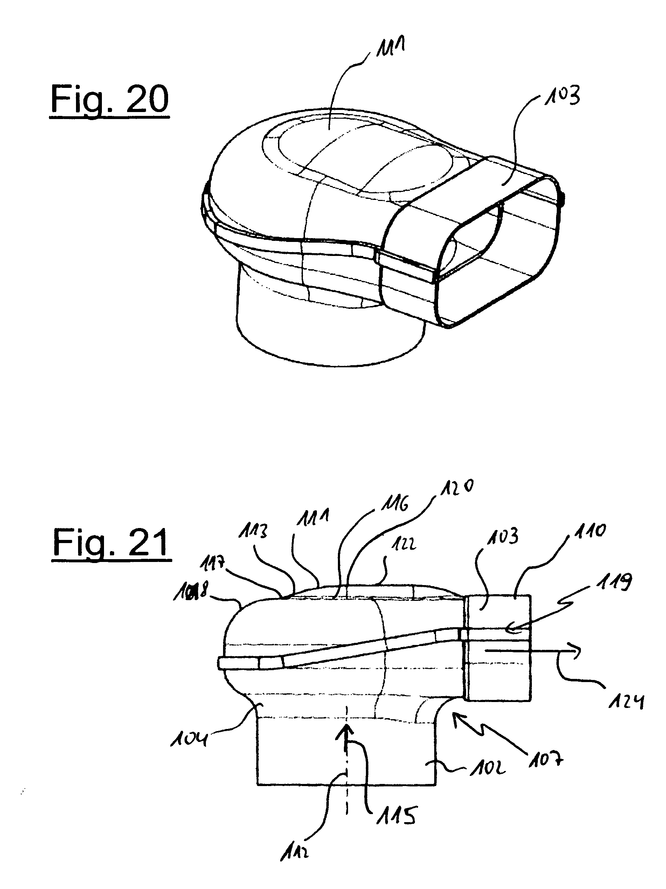

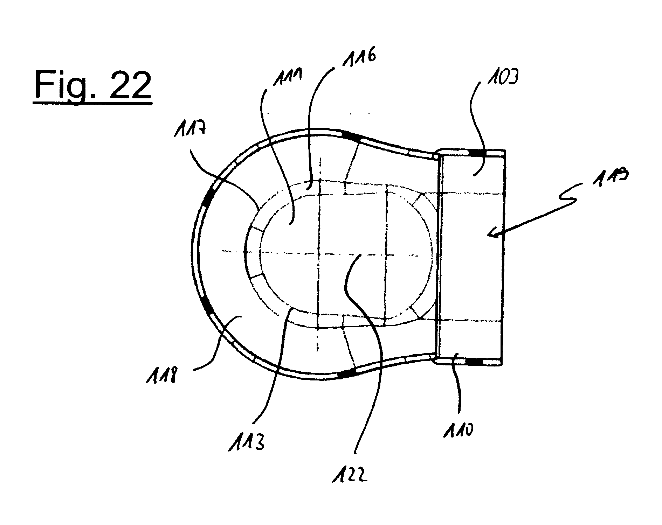

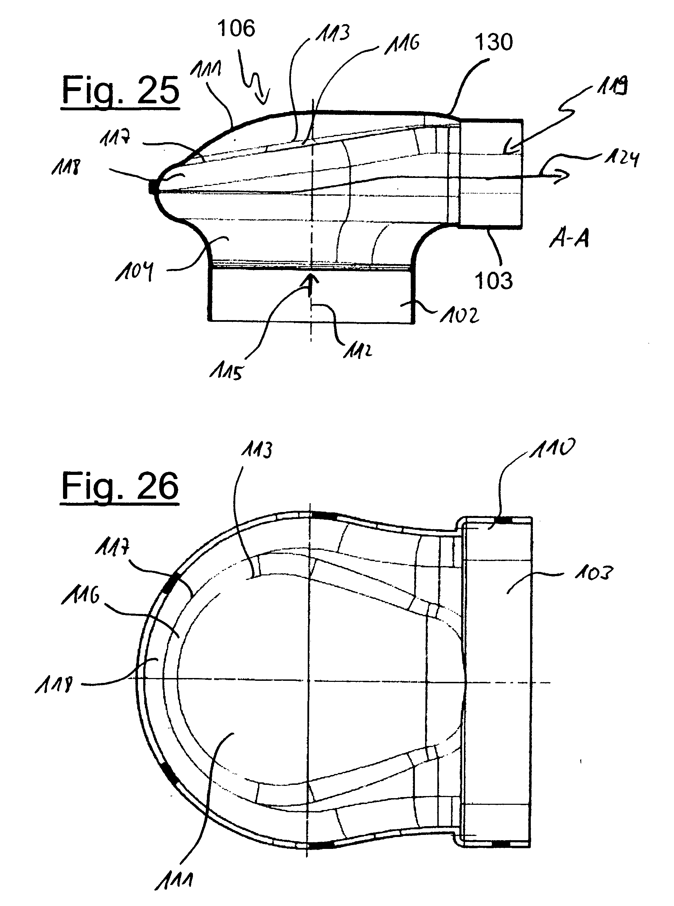

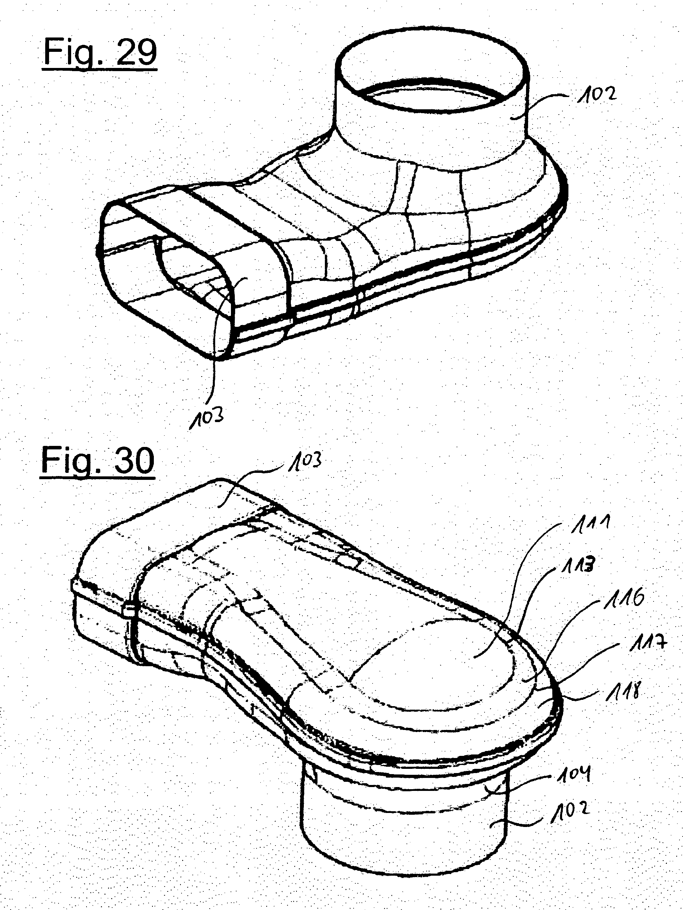

Im Folgenden wird eine Mehrzahl von Ausführungsformen der vorliegenden Erfindung im Detail beschrieben. Dabei zeigen die Figuren 1 bis 10 Rundbögen mit den erfindungsgemäßen Merkmalen, während die Figuren 14 bis 32 Umlenkstücke mit den erfindungsgemäßen Merkmalen darstellen.

Während die Rundbögen einen kreisförmigen Querschnitt sowohl des Eintrittsrohrs als auch des Austrittsrohrs zeigen, dienen die Umlenkstücke dem Übergang von einem (im Wesentlichen vertikal angeordneten) Eintrittsrohr auf ein (im Wesentlichen horizontal angeordnetes) Austrittsrohr.

Soweit die Figuren Elemente mit identischen Funktionen aufzeigen, so sind diese auch mit identischen Bezugszeichen versehen.

Die Figuren 1 bis 6 zeigen eine erste Ausführungsform eines erfindungsgemäßen Rundbogens 1. Dieser weist ein Eintrittsrohr 2 mit einem Eintrittsquerschnitt und ein Austrittsrohr 3 mit einem Austrittsquerschnitt auf. In der dargestellten Ausführungsform ist der Rundbogen dafür vorgesehen, ein durch einen im Wesentlichen vertikalen Rohrabschnitt in den Rundbogen 1 einströmendes Gas um 90° abzulenken, sodass es im Wesentlichen horizontal aus dem Austrittsrohr 3 austritt. Sowohl das Eintrittsrohr 2 als auch das Austrittsrohr 3 weisen einen kreisförmigen Eintritts-14 bzw. Austrittsquerschnitt 17 auf, wobei es auf die Querschnittsform der Innenwand des Eintrittsrohrs 2 bzw. des Austrittsrohrs 3 ankommt.

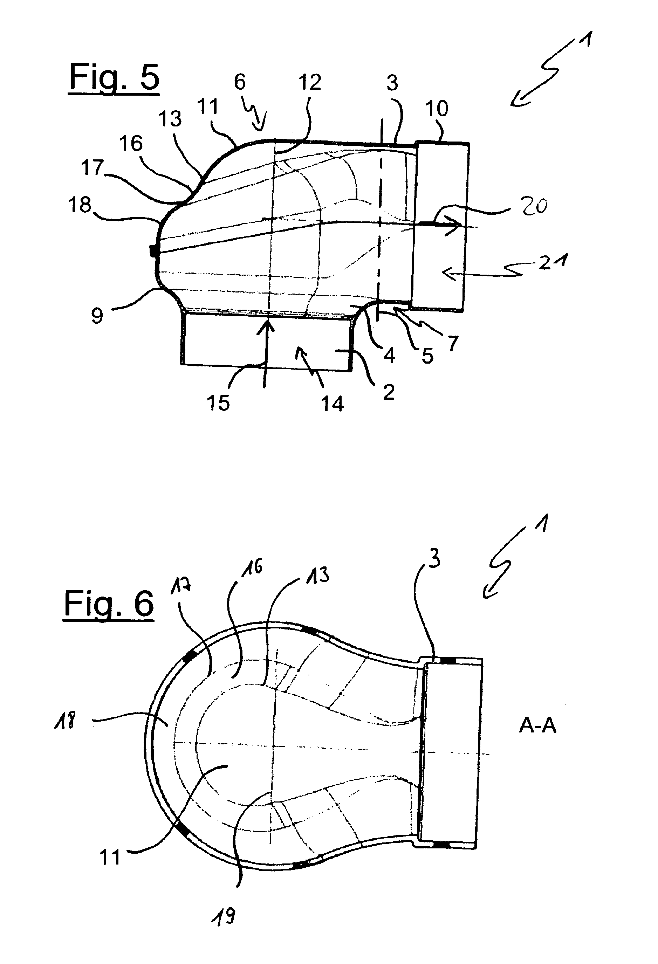

Wie in allen Darstellungen der Figuren 1 bis 6 der ersten Ausführungsform des Rundbogens ersichtlich, weist das Eintrittsrohr 2 an seinem oberen Ende einen Diffusor 4 auf. Dieser wird von einem sich im Durchmesser aufweitenden Abschnitt des Eintrittsrohrs 3 gebildet. Besonders deutlich ist der Aufbau des erfindungsgemäßen Rundbogens aus der Schnittansicht in Figur 5 zu erkennen. Diese Schnittansicht entspricht einem Schnitt entlang der Linie A-A aus Figur 1, d.h. einer Schnittebene, welche mit der Symmetrieebene des Rundbogens 1 zusammenfällt.

Die Schnittansicht erlaubt auch eine Abgrenzung der einzelnen Elemente des Rundbogens. So bildet die mit 5 bezeichnete Hilfslinie die Trennung zwischen dem Eintrittsrohr 2 bzw. seinem integralen Bestandteil, dem Diffusor 4, und dem Austrittsrohr 3 bzw. dem Rohrübergang 6.

Wie aus Figur 5 weiter ersichtlich ist, geht der Diffusor 4 und damit das Eintrittsrohr 2 am Innenbogen 7 unmittelbar in das Austrittsrohr 3 über. Das Austrittsrohr 3 beginnt in der dargestellten Ausführungsform an der Hilfslinie 5. Während also das Eintrittsrohr 2 am Innenbogen 7 unmittelbar in das Austrittsrohr 3 übergeht, erstreckt sich zwischen dem Diffusor 4 und dem Austrittsrohr 3 an der Außenseite des Bogens der Rohrübergang 6 mit seinen erfindungswesentlichen Merkmalen. Der Rohrübergang 6 erstreckt sich dabei von dem in Figur 5 mit 9 bezeichneten Punkt, der die Trennung zwischen Eintrittsrohr 2 bzw. Diffusor 4 und dem Rohrübergang 6 darstellt und der Hilfslinie 5, welche den Rohrübergang 6 gegenüber dem Austrittsrohr 3 abgrenzt.

Während in der dargestellten Ausführungsform das Eintrittsrohr 2 so ausgestaltet ist, dass es in eine Muffe eines Rohrs eingeschoben werden kann, weist das Austrittsrohr 3 selbst eine Muffe 10 auf, in die ein sich horizontal erstreckendes Rohr eingeschoben werden kann.

Das wesentliche Element des erfindungsgemäßen Rundbogens wird von dem mit 11 bezeichneten im Rohrinneren konkav gekrümmten Wandabschnitt gebildet. Dieser konkav gekrümmte Innenwandabschnitt 11 erstreckt sich von einer Verlängerung der Rohrmitte 12 aus entgegen der Strömungsrichtung mit konkaver Krümmung bis zu einem mit dem Bezugszeichen 13 bezeichneten Punkt. In diesem Bereich erstreckt sich der konkav gekrümmte Innenwandabschnitt 11 vollständig über dem Eintrittsquerschnitt 14 bzw. dessen Querschnittsfläche, wobei der konkav gekrümmte Innenwandabschnitt 11 des Rohrübergangs 6 einen deutlichen Abstand vom Ende 9 des Eintrittsrohrs 2 aufweist. Der konkav gekrümmte Innenwandabschnitt 11 des Rohrübergangs 6 bewirkt, dass ein durch das Eintrittsrohr 2 einströmendes Gas, dessen Geschwindigkeit durch den Diffusor 4 reduziert wird, ohne nennenswerten Druckverlust aus einer vertikalen Einströmrichtung, welche durch den Pfeil 15 angedeutet ist, in eine im Wesentlichen horizontale Ausströmrichtung, welche durch den Pfeil 20 angedeutet ist, abgelenkt wird.

In der dargestellten Ausführungsform schließt sich an den konkav gekrümmten Innenwandabschnitt 11 des Rohrübergangs 6 ein (wieder aus dem Rohrinneren heraus betrachtet) konvex gekrümmter Innenwandabschnitt 16 an, sodass sich in der in Figur 5 dargestellten Querschnittsansicht ein als S-förmig zu beschreibender Verlauf der Innenwand des Rohrübergangs ergibt. Der konvexe Innenwandabschnitt 16 wiederum geht an einem Übergangspunkt 17 in einen zweiten konkaven Innenwandabschnitt 18 über. Dieser zweite konkav gekrümmte Innenwandabschnitt 18 des Rohrübergangs 6 dient, dem Diffusor 4 nachgeschaltet, als Düse, d.h. einer Beschleunigung des Luftstroms im Rohrübergang 6 selbst.

In der Ausführungsform aus den Figuren 1 bis 6 weist der Rohrübergang 6 nicht nur in der Symmetrieebene einen konkav gekrümmten Innenwandabschnitt 11 auf, sondern auch in dazu parallelen Ebenen, so wie dies besonders gut aus der Darstellung aus Figur 2 ersichtlich ist. Da die konkav gekrümmten Innenwandabschnitte in zu der Symmetrieebene A-A parallelen Ebene eine sich mit zunehmendem Abstand von der Symmetrieebene verkürzende Länge zwischen der Verlängerung 12 der Rohrmitte des Eintrittsrohrs 2 und dem Ende 13 des konkav gekrümmten Rohrabschnitts 11 aufweist, wird der Rohrübergang 6 zumindest in einer die Hälfte des Querschnitts des Eintrittsrohrs 2 abdeckenden Bereich von einer Kuppel gebildet.

Dazu weist der konkav gekrümmte Innenwandabschnitt 11, so wie dies beispielsweise aus der Draufsicht aus Figur 6 ersichtlich ist, auch in Ebenen senkrecht zur Symmetrieebene A-A, wie zum Beispiel der mit 19 bezeichneten Ebene eine konkave Krümmung des Innenwandabschnitts auf.

Insbesondere weist der sich über den Eintrittsquerschnitt 14 des Eintrittsrohrs 2 erstreckende konkav gekrümmte Innenwandabschnitt 11 in Ebenen 19 senkrecht zur Symmetrieebene A-A in Strömungsrichtung des Gases eine zunächst zunehmende und dann wieder abnehmende Breite auf.

Wie ferner aus der Schnittansicht aus Figur 5 ersichtlich ist, ist der konkav gekrümmte Innenwandabschnitt 11 des Rohrübergangs 6 so konstruiert, dass sein Scheitelpunkt, d.h. sein höchster Punkt, in der Verlängerung der Rohrmitte 12 bzw. des Schwerpunkts des Eintrittsrohrs 2 mit der außen liegenden Wand des Austrittsrohrs 3 zusammenfällt. Mit anderen Worten ausgedrückt liegt der Scheitelpunkt des gekrümmten Innenwandabschnitts 11 in der Symmetrieebene A-A in einer Ebene, die senkrecht zur Symmetrieebene A-A ist und in der sich der bogenäußere Wandabschnitt des Austrittsrohrs 3 erstreckt.

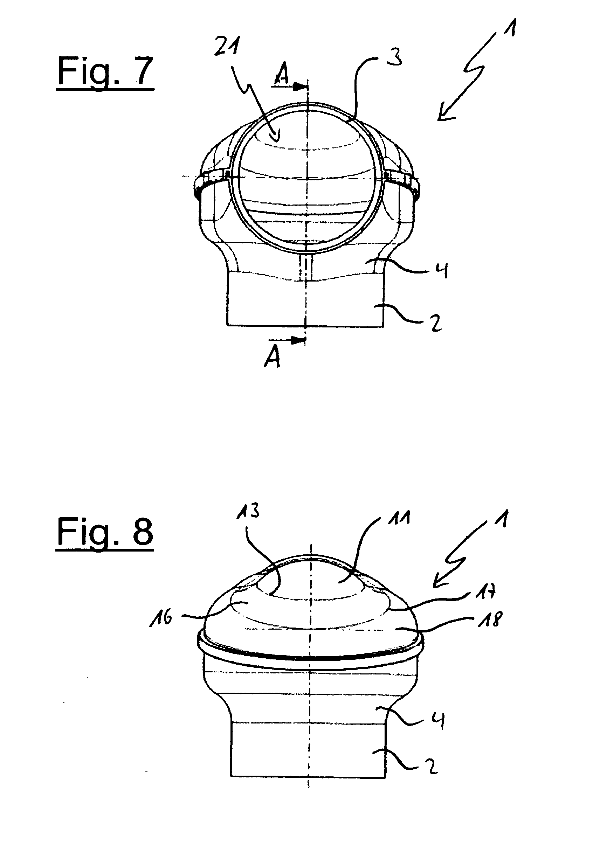

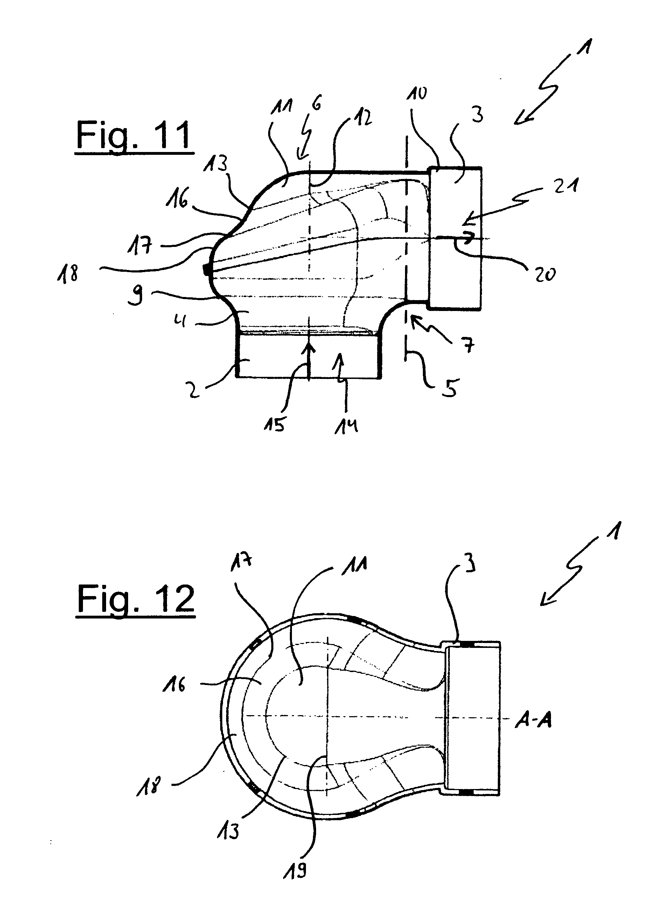

Die Figuren 7 bis 12 zeigen eine alternative Ausführungsform des erfindungsgemäßen Rundbogens, die sich von der Ausführungsform aus den Figuren 1 bis 6 im Wesentlichen durch den Verlauf des sich an den in der Symmetrieebene A-A konkav gekrümmten Verlauf des Innenwandabschnitts 11 in Strömungsrichtung anschließenden Wandabschnitts des Rohrübergangs 6 unterscheidet.

Während bei der ersten Ausführungsform, so wie dies insbesondere aus Figur 6 ersichtlich ist, die Breite einer konkaven Krümmung in Ebenen senkrecht zur Symmetrieebene A-A in Strömungsrichtung hinter dem in der Symmetrieebene konkav gekrümmten Innenwandabschnitt 11 1 abnimmt bis sie kurz vor bzw. im Bereich des Austrittsrohrs wieder zunimmt, nimmt die Breite der konkaven Krümmung in Ebenen senkrecht zur Symmetrieebene A-A bei der Ausführungsform aus Figuren 7 bis 12 ausgehend von der Ebene 19 mit variierender Steigung ab.

Wie eingangs erwähnt, zeigen die Ausführungsformen der Figuren 13 bis 17, 18 bis 22, 23 bis 26 bzw. 27 bis 32 keine Rundbögen, sondern Rohrübergänge. Neben einer Umlenkung eines den Rohrübergang 101 durchströmenden Gases um 90° bewirken diese eine Änderung der Querschnittsform des Rohrs von einem runden Eintrittsrohr 102 auf ein im Wesentlichen rechteckiges Austrittsrohr 103. Wieder verfügt das Eintrittsrohr 102 über einen Diffusor 104, mit dem das Eintrittsrohr 102 endet. Der Diffusor 104 geht auf der Bogeninnenseite in das Austrittsrohr 103 über, während er in den sonstigen Bereichen in den Rohrübergang 106 übergeht.

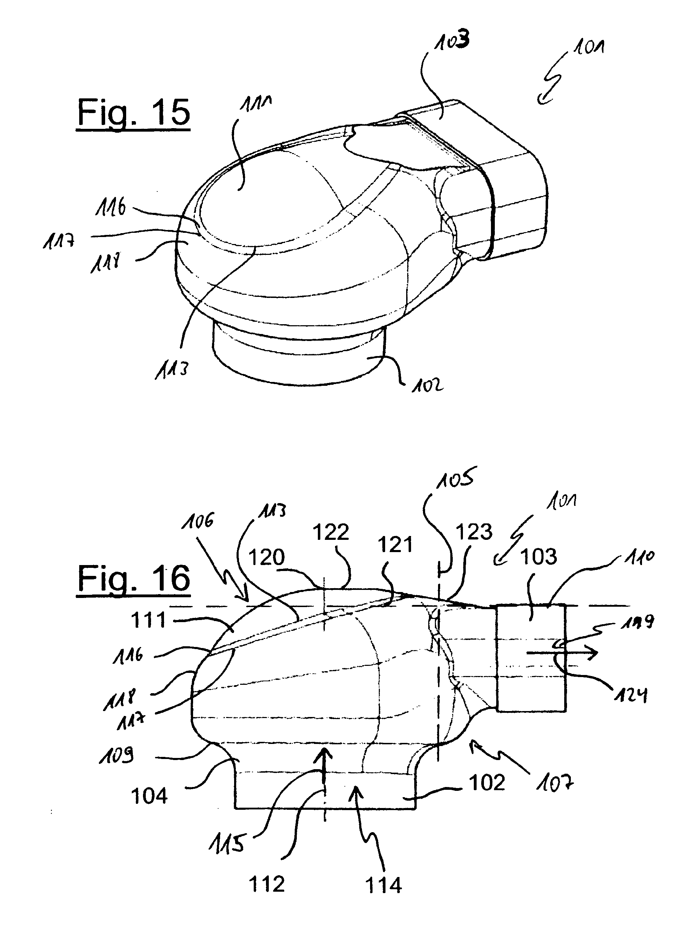

Wie in der Seitenansicht aus Figur 16 ersichtlich ist, weist bei dieser Ausführungsform des Rohrübergangs 100 der in der Symmetrieebene konkav gekrümmte Innenwandabschnitt 111 einen Scheitelpunkt 120 auf, der deutlich höher liegt als die Innenwand des Austrittsrohrs 103 auf der Bogenaußenseite. Mit anderen Worten ausgedrückt, schneidet der konkav gekrümmte Innenwandabschnitt 111 des den Eintrittsquerschnitt 114 des Eintrittsrohrs 102 etwa zur Hälfte überspannenden konkav gekrümmten Innenwandabschnitts 111 eine zur Symmetrieebene senkrechte Ebene, in der sich die kurvenaußenseitige Wand des Austrittsrohrs 103 erstreckt. Diese Ebene ist in Figur 16 mit dem Bezugszeichen 121 versehen.

Wie zuvor für den Rundbogen beschrieben, geht auch bei den Ausführungsformen des erfindungsgemäßen Umlenkstücks das Eintrittsrohr 102 bzw. dessen Diffusor 104 auf der Bogeninnenseite in das Austrittsrohr 103 über, während sich der Rohrübergang 106 auf der Bogenau-βenseite (in der Symmetrieebene betrachtet) von dem Diffusor 104 bis zum Austrittsrohr 103 erstreckt.

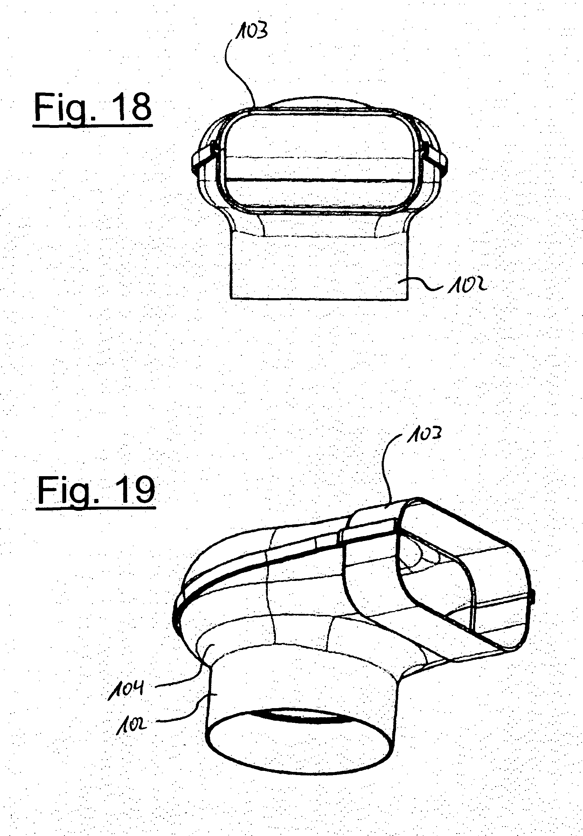

Die weiteren Ausführungsformen des Umlenkstücks der Figuren 18 bis 22, 23 bis 26 bzw. 27 bis 32 unterscheiden sich von der Ausführungsform aus Figuren 13 bis 17 primär durch die Ausgestaltung des Rohrübergangs in Strömungsrichtung anschließend an den konkaven Innenwandabschnitt, welcher sich abschnittsweise über den Eintrittsquerschnitt 114 des Eintrittsrohrs 102 erstreckt.

Bei der Ausführungsform aus Figuren 13 bis 17 folgt ausgehend von der Mitte 112 der Querschnittsfläche des Eintrittsrohrs 102 in Strömungsrichtung an den konkav gekrümmten Innenwandabschnitt 111 des Rohrübergangs ein im Wesentlichen gerader Abschnitt 122, der im Wesentlichen parallel zu den Wänden des Austrittsrohrs 103 ist. An diesen geraden Abschnitt 122 schließt sich ein weiterer gerader Abschnitt 123 an, der so verläuft, dass er den Querschnitt des Rohrübergangs 106 wieder auf die Höhe des Austrittsrohrs 103 anpasst. Wie aus der perspektivischen Ansicht von schräg oben in Figur 15 ersichtlich ist, ist der konkav gekrümmte Innenwandabschnitt 111 so ausgestaltet, dass sich die Breite des gekrümmten Innenwandabschnitts in Ebenen senkrecht zur Symmetrieebene zunächst verbreitert und dann wieder verringert.

Dem gegenüber bleibt diese Breite bei der Ausführungsform aus Figuren 18 bis 22 in Ebenen senkrecht zur Symmetrieebene zunächst im Wesentlichen konstant, um sich dann erst an bzw. kurz vor dem Übergang zum Austrittsrohr 103 wieder zu verringern.

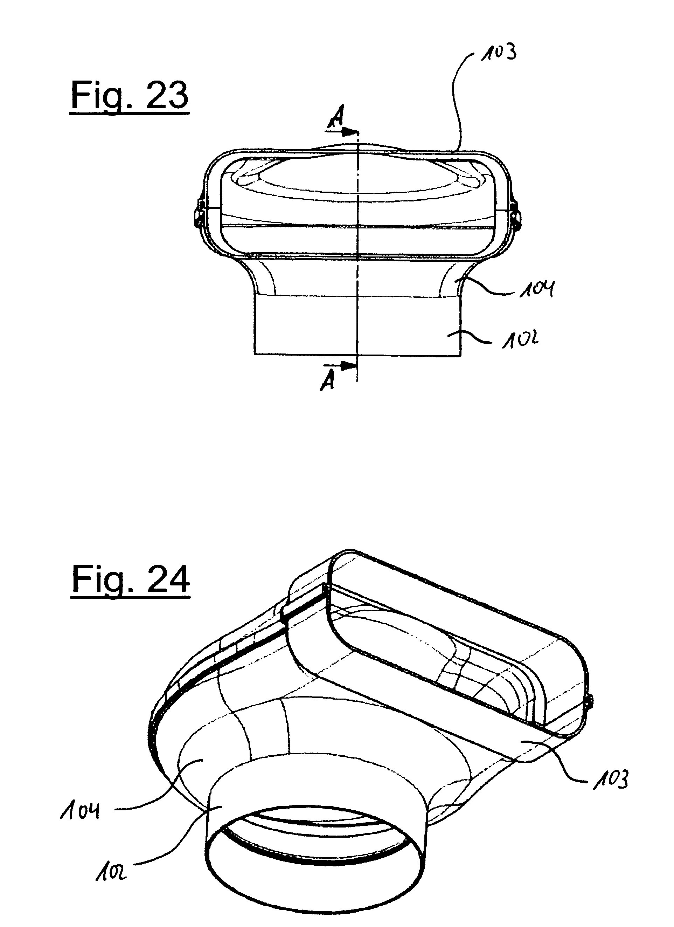

Die Ausführungsform aus Figuren 23 bis 26 hingegen folgt die Breite des konkav gekrümmten Innenwandabschnitts in Ebenen senkrecht zur Symmetrieachse im Wesentlichen dem Konzept, so wie es bei der Ausführungsform der Figuren 13 bis 17 verfolgt wird, nämlich mit einer zunächst zunehmenden Breite und dann wieder abnehmenden Breite. Jedoch findet der Angleich der Höhe des Rohrübergangs 106 auf die Höhe des Austrittsrohrs 103 bei der Ausführungsform aus Figuren 23 bis 26 nicht in Form einer in der Höhe fallenden Geraden, so wie in Figur 16 gezeigt, statt, sondern mit einem gekrümmten Innenwandabschnitt 130 (in der Symmetrieebene betrachtet), der zum Teil noch dem Rohrübergang 106 zuzuordnen ist und zum Teil bereits dem gemufften Austrittsrohr 103.

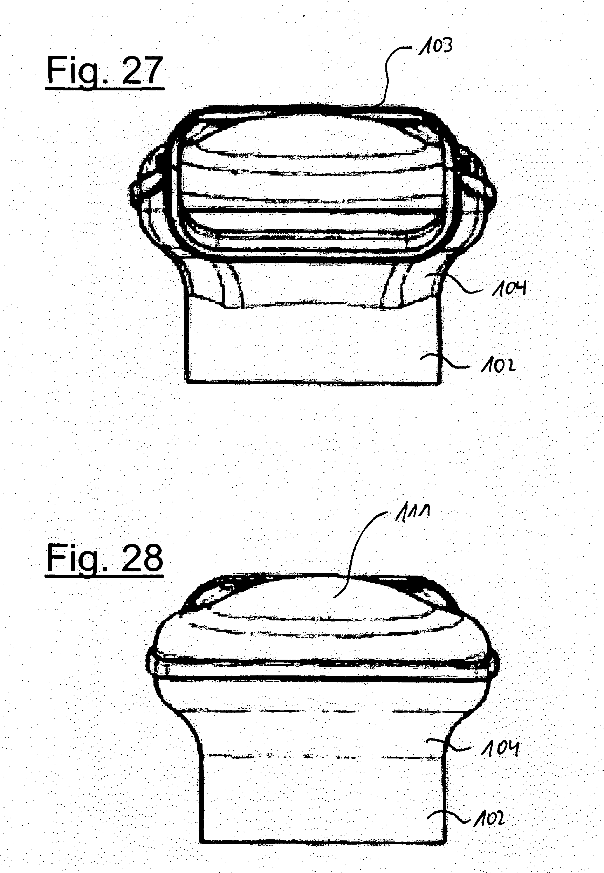

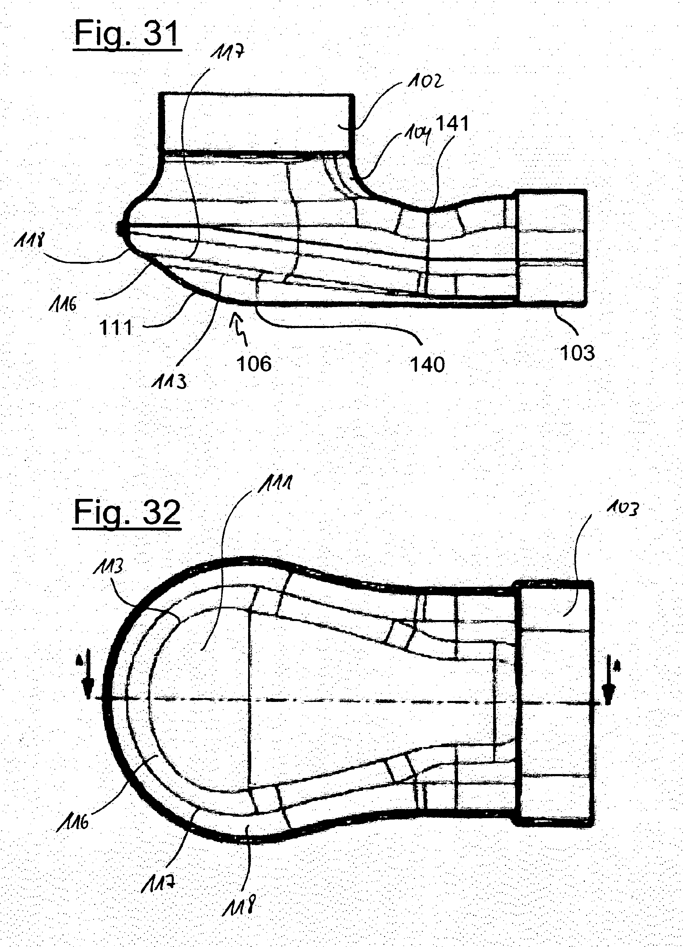

Die Ausführungsform aus Figuren 27 bis 32 ist, wie sich insbesondere aus der Querschnittsansicht aus Figur 31 erkennen lässt, insbesondere dadurch geprägt, dass der Scheitelpunkt 140 des gekrümmten Innenwandabschnitts 111 des Rohrübergangs 106 in der gleichen zur Symmetrieebene senkrechten Ebene liegt, wie die bogenaußenseitige Innenwand des Austrittsrohrs 103. Ein "Überschießen" des konkav gekrümmten Innenwandabschnitts 111 des Rohrübergangs 106 wie in den anderen der hier dargestellten Ausführungsformen des Umlenkstücks findet nicht statt. Darüber hinaus weist das Austrittsrohr 103 an dem mit 141 bezeichneten Punkt ein Verjüngung auf, welche eine Geschwindigkeitszunahme des Gasstroms durch das erfindungsgemäße Übergangsstück in diesem Bereich gewährleistet.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmalen oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Rundbogen
- 2: Eintrittsrohr
- 3: Austrittsrohr
- 4: Diffusor
- 5: Hilfslinie
- 6: Rohrübergang
- 7: Innenbogen
- 9: Trennungspunkt
- 10: Muffe
- 11: konkav gekrümmter Innenwandabschnitt
- 12: Rohrmitte
- 13: Übergangspunkt
- 14: Eintrittsquerschnitt
- 15: Einströmrichtung
- 16: konvex gekrümmter Innenwandabschnitt
- 17: Übergangspunkt
- 18: zweiter konkav gekrümmter Innenwandabschnitt
- 19: Ebene senkrecht zur Symmetrieebene
- 20: Ausströmrichtung
- 21: Austrittsquerschnitt

- 101: Umlenkstück
- 102: Eintrittsrohr
- 103: Austrittsrohr
- 104: Diffusor
- 105: Hilfslinie
- 106: Rohrübergang
- 107: Innenbogen
- 109: Trennungspunkt
- 110: Muffe
- 111: konkav gekrümmter Innenwandabschnitt
- 112: Mitte der Fläche des Eintrittsquerschnitts
- 113: Übergangspunkt
- 114: Eintrittsquerschnitt
- 115: Einströmrichtung
- 116: konvex gekrümmter Innenwandabschnitt
- 117: Übergangspunkt
- 118: zweiter konkav gekrümmter Innenwandabschnitt
- 119: Austrittsquerschnitt
- 120: Scheitelpunkt
- 121: Ebene
- 122: gerader Abschnitt
- 123: gerader Abschnitt
- 124: Ausströmrichtung

- 130: gekrümmter Innenwandabschnitt

- 140: Scheitelpunkt
- 141: Verjüngung

## Patentansprüche

1. Übergangsstück für eine Umlenkung strömender Gase aus einer Einströmrichtung in eine Ausströmrichtung mit
einem Eintrittsrohr (2) mit einem Eintrittsquerschnitt (14),
wobei das Eintrittsrohr (2) einen als Diffusor (4) ausgestalteten Abschnitt aufweist, in dem sich der Eintrittsquerschnitt (14) in Strömungsrichtung vergrößert,
einem Austrittsrohr (3) mit einem Austrittsquerschnitt und
einem Rohrübergang (6), der das Eintrittsrohr (2) und das Austrittsrohr (3) so miteinander verbindet, dass das Eintrittsrohr (2) und das Austrittsrohr (3) einen Umlenkwinkel einschließen,
wobei der Rohrübergang (6) einen sich zumindest abschnittsweise über den Eintrittsquerschnitt (14) des Eintrittsrohrs (2) erstreckenden konkav gekrümmten Innenwandabschnitt (11) aufweist und
wobei der Rohrübergang (6) einen sich an den konkav gekrümmten Innenwandabschnitt (11) anschließenden konvex gekrümmten Innenwandabschnitt (16) aufweist,
**dadurch gekennzeichnet,**
**dass** der Rohrübergang (6) einen sich an den konvex gekrümmten Innenwandabschnitt (16) anschließenden zweiten konkav gekrümmten Innenwandabschnitt (18) aufweist.

2. Übergangsstück nach Anspruch 1, **dadurch gekennzeichnet, dass** das Übergangsstück in Strömungsrichtung hinter dem Diffusor (4) eine Düse aufweist, die vorzugsweise von dem Rohrübergang (6) gebildet wird.

3. Übergangsstück nach Anspruch 1 oder 2, **dadurch gekennzeichnet, dass** sich der an den konkav gekrümmten Innenwandabschnitt (11) anschließende konvex gekrümmte Innenwandabschnitt (16) zumindest abschnittsweise über den Eintrittsquerschnitt (14) des Eintrittsrohrs (2) erstreckt.

4. Übergangsstück nach einem der Ansprüche 1 bis 3, **dadurch gekennzeichnet, dass** es symmetrisch ausgestaltet ist, so dass es eine Symmetrieebene aufweist, die von der Zuströmrichtung und der Abströmrichtung aufgespannt wird.

5. Übergangsstück nach Anspruch 4, **dadurch gekennzeichnet, dass** sich der sich zumindest abschnittsweise über den Eintrittsquerschnitt (14) des Eintrittsrohrs (2) erstreckende konkav gekrümmte Innenwandabschnitt (11) des Rohrübergangs (6) in der Symmetrieebene ausgehend von einer zu der Einströmrichtung parallelen Geraden, die durch den Schwerpunkt des Eintrittsquerschnitts (14) verläuft, erstreckt.

6. Übergangsstück nach Anspruch 4 oder 5, **dadurch gekennzeichnet, dass** sich der sich über den Eintrittsquerschnitt (14) des Eintrittsrohrs (2) erstreckende konkav gekrümmte Innenwandabschnitt (11) des Rohrübergangs (6) in der Symmetrieebene derart erstreckt, dass er einen Abschnitt aufweist, der sich in einer Ebene erstreckt oder diese schneidet, die senkrecht zur Symmetrieebene ist und in der ein Innenwandabschnitt des Austrittsrohrs (3) liegt.

7. Übergangsstück nach einem der Ansprüche 4 bis 6, **dadurch gekennzeichnet, dass** der sich zumindest abschnittsweise über den Eintrittsquerschnitt (14) des Eintrittsrohrs (2) erstreckende konkav gekrümmte Innenwandabschnitt (11) des Rohrübergangs (6) in Ebenen parallel zur Symmetrieebene eine mit zunehmenden Abstand von der Symmetrieebene abnehmende Länge gemessen parallel zur Ausströmrichtung aufweist.

8. Übergangsstück nach einem der Ansprüche 4 bis 7, **dadurch gekennzeichnet, dass** der sich zumindest abschnittsweise über den Eintrittsquerschnitt (14) des Eintrittsrohrs (2) erstreckende Innenwandabschnitt des Rohrübergangs (6) in Ebenen senkrecht zur Symmetrieebene konkav gekrümmt ist.

9. Übergangsstück nach einem der Ansprüche 4 bis 8, **dadurch gekennzeichnet, dass** sich in der Symmetrieebene an den konkav gekrümmten Innenwandabschnitt (11) des Rohrübergangs (6), der sich über den Eintrittsquerschnitt (14) erstreckt, in Strömungsrichtung des Gases in Richtung auf das Austrittsrohr (3) hin ein gerader Innenwandabschnitt anschließt.

10. Übergangsstück nach einem der Ansprüche 4 bis 8, **dadurch gekennzeichnet, dass** der sich zumindest abschnittsweise über den Eintrittsquerschnitt (14) des Eintrittsrohrs (2) erstreckende konkav gekrümmte Innenwandabschnitt (11) des Rohrübergangs (6) in Ebenen senkrecht zur Symmetrieebene in Strömungsrichtung des Gases eine zunächst zunehmende Breite aufweist und dann vorzugsweise eine wieder abnehmende Breite aufweist.

11. Übergangsstück nach einem der Ansprüche 1 bis 10, **dadurch gekennzeichnet, dass** es ein Umlenkstück ist, wobei der Eintrittsquerschnitt (14) und der Austrittsquerschnitt voneinander verschiedene Formen aufweisen, vorzugsweise mit einem im Wesentlichen kreisförmigen Eintrittsquerschnitt (14) und einem im Wesentlichen ovalen bis rechteckigen Austrittsquerschnitt.

12. Übergangsstück nach einem der Ansprüche 1 bis 10, **dadurch gekennzeichnet, dass** es ein Bogen ist, wobei der Eintrittsquerschnitt (14) und der Austrittsquerschnitt eine im Wesentlichen gleiche Formen aufweisen.

## Claims

1. A transitional portion for deflection of flowing gases from an inlet flow direction into an outlet flow direction comprising
an inlet pipe (2) having an inlet cross-section (14),
wherein the inlet pipe (2) has a portion which is in the form of a diffuser (4) and in which the inlet cross-section (14) increases in the flow direction,
an outlet pipe (3) having an outlet cross-section, and
a pipe transition (6) which connects the inlet pipe (2) and the outlet pipe (3) in such a way that the inlet pipe (2) and the outlet pipe (3) include a deflection angle,
wherein the pipe transition (6) has a concavely curved inside wall portion (11) extending at least portion-wise over the inlet cross-section (14) of the inlet pipe (2) and
wherein the pipe transition (6) has a convexly curved inside wall portion (16) adjoining the concavely curved inside wall portion (11),
**characterised in that**
the pipe transition (6) has a second concavely curved inside wall portion (18) adjoining the convexly curved inside wall portion (16).

2. A transitional portion according to claim 1 **characterised in that** downstream of the diffuser (4) in the flow direction the transitional portion has a nozzle which is preferably formed by the pipe transition (6).

3. A transitional portion according to claim 1 or claim 2 **characterised in that** the convexly curved inside wall portion (16) adjoining the concavely curved inside wall portion (11) extends at least portion-wise over the inlet cross-section (14) of the inlet pipe (2).

4. A transitional portion according to one of claims 1 to 3 **characterised in that** it is of a symmetrical configuration so that it has a plane of symmetry defined by the feed flow direction and the discharge flow direction.

5. A transitional portion according to claim 4 **characterised in that** the concavely curved inside wall portion (11) of the pipe transition (6), that extends at least portion-wise over the inlet cross-section (14) of the inlet pipe (2) extends in the plane of symmetry from a straight line which is parallel to the inlet flow direction and which extends through the centre of gravity of the inlet cross-section (14).

6. A transitional portion according to claim 4 or claim 5 **characterised in that** the concavely curved inside wall portion (11) of the pipe transition (6), that extends over the inlet cross-section (14) of the inlet pipe (2), extends in the plane of symmetry in such a way that it has a portion which extends in or intersects a plane which is perpendicular to the plane of symmetry and in which an inside wall portion of the outlet pipe (3) is disposed.

7. A transitional portion according to one of claims 4 to 6 **characterised in that** the concavely curved inside wall portion (11) of the pipe transition (6), that extends at least portion-wise over the inlet cross-section (14) of the inlet pipe (2), in planes parallel to the plane of symmetry, is of a length that decreases with increasing spacing from the plane of symmetry, measured parallel to the outlet flow direction.

8. A transitional portion according to one of claims 4 to 7 **characterised in that** the inside wall portion of the pipe transition (6), that extends at least portion-wise over the inlet cross-section (14) of the inlet pipe (2), is concavely curved in planes perpendicularly to the plane of symmetry.

9. A transitional portion according to one of claims 4 to 8 **characterised in that** in the plane of symmetry a straight inside wall portion adjoins the concavely curved inside wall portion (11) of the pipe transition (6), that extends over the inlet cross-section (14), in the gas flow direction towards the outlet pipe (3).

10. A transitional portion according to one of claims 4 to 8 **characterised in that** the concavely curved inside wall portion (11) of the pipe transition (6), that extends at least portion-wise over the inlet cross-section (14) of the inlet pipe (2), is of a firstly increasing width and preferably then a width which decreases again in planes perpendicularly to the plane of symmetry in the gas flow direction.

11. A transitional portion according to one of claims 1 to 10 **characterised in that** it is a deflection portion, wherein the inlet cross-section (14) and the outlet cross-section are of mutually different shapes, preferably with a substantially circular inlet cross-section (14) and a substantially oval to rectangular outlet cross-section.

12. A transitional portion according to one of claims 1 to 10 **characterised in that** it is an arc, wherein the inlet cross-section (14) and the outlet cross-section are of substantially identical shapes.

## Revendications

1. Raccord servant à changer la direction de gaz en écoulement d'une direction d'entrée vers une direction de sortie, comprenant un tube d'entrée (2) présentant une section d'entrée (14),
le tube d'entrée (2) présentant un segment conçu comme un diffuseur (4) dans lequel la section d'entrée (14) s'agrandit dans le sens de l'écoulement,
un tube de sortie (3) présentant une section de sortie, et
un raccord de tubes (6) qui relie le tube d'entrée (2) et le tube de sortie (3) l'un à l'autre de manière telle que le tube d'entrée (2) et le tube de sortie (3) enferment un angle de changement de direction,
le raccord de tubes (6) présentant un segment de paroi intérieure à courbure concave (11), qui s'étend au moins en partie sur la section d'entrée (14) du tube d'entrée (2), et
le raccord de tubes (6) présentant un segment de paroi intérieure à courbure convexe (16) qui fait suite au segment de paroi intérieure à courbure concave (11),
**caractérisé en ce que** le raccord de tubes (6) présente un deuxième segment de paroi intérieure à courbure concave (18) qui fait suite au segment de paroi intérieure à courbure convexe (16).

2. Raccord selon la revendication 1, **caractérisé en ce que** le raccord présente, en aval du diffuseur (4) dans le sens de l'écoulement, une buse qui est de préférence formée par le raccord de tubes (6).

3. Raccord selon la revendication 1 ou 2, **caractérisé en ce que** le segment de paroi intérieure à courbure convexe (16) qui fait suite au segment de paroi intérieure à courbure concave (11) s'étend au moins en partie sur la section d'entrée (14) du tube d'entrée (2).

4. Raccord selon l'une des revendications 1 à 3, **caractérisé en ce qu'**il est de configuration symétrique, de sorte qu'il présente un plan de symétrie qui est défini par la direction d'entrée et par la direction de sortie.

5. Raccord selon la revendication 4, **caractérisé en ce que** le segment de paroi intérieure à courbure concave (11) du raccord de tubes (6) qui s'étend au moins en partie sur la section d'entrée (14) du tube d'entrée (2) s'étend dans le plan de symétrie en partant d'une droite parallèle à la direction d'entrée qui passe par le centre de gravité de la section d'entrée (14).

6. Raccord selon la revendication 4 ou 5, **caractérisé en ce que** le segment de paroi intérieure à courbure concave (11) du raccord de tubes (6) qui s'étend sur la section d'entrée (14) du tube d'entrée (2) s'étend dans le plan de symétrie de manière à présenter un segment qui s'étend dans un plan, ou qui coupe ce plan, qui est perpendiculaire au plan de symétrie et dans lequel se trouve un segment de paroi intérieure du tube de sortie (3).

7. Raccord selon l'une des revendications 4 à 6, **caractérisé en ce que** le segment de paroi intérieure à courbure concave (11) du raccord de tubes (6) qui s'étend au moins en partie sur la section d'entrée (14) du tube d'entrée (2) présente, dans des plans parallèles au plan de symétrie, une longueur, mesurée parallèlement à la direction de sortie, qui décroît avec l'accroissement de la distance au plan de symétrie.

8. Raccord selon l'une des revendications 4 à 7, **caractérisé en ce que** le segment de paroi intérieure du raccord de tubes (6) qui s'étend au moins en partie sur la section d'entrée (14) du tube d'entrée (2) est à courbure concave dans des plans perpendiculaires au plan de symétrie.

9. Raccord selon l'une des revendications 4 à 8, **caractérisé en ce qu'**un segment de paroi intérieure droit fait suite, dans le sens de l'écoulement du gaz en direction du tube de sortie (3), dans le plan de symétrie, au segment de paroi intérieure à courbure concave (11) du raccord de tubes (6) qui s'étend sur la section d'entrée (14).

10. Raccord selon l'une des revendications 4 à 8, **caractérisé en ce que** le segment de paroi intérieure à courbure concave (11) du raccord de tubes (6) qui s'étend au moins en partie sur la section d'entrée (14) du tube d'entrée (2) présente, dans des plans perpendiculaires au plan de symétrie, une largeur qui est tout d'abord croissante dans le sens de l'écoulement du gaz, puis de préférence une largeur de nouveau décroissante.

11. Raccord selon l'une des revendications 1 à 10, **caractérisé en ce qu'**il s'agit d'un élément de changement de direction dans lequel la section d'entrée (14) et la section de sortie présentent des formes différentes l'une de l'autre, la section d'entrée (14) étant de préférence sensiblement circulaire et la section de sortie de préférence sensiblement ovale à rectangulaire.

12. Raccord selon l'une des revendications 1 à 10, **caractérisé en ce qu'**il s'agit d'un coude, la section d'entrée (14) et la section de sortie présentant des formes sensiblement identiques.
